(19) Europäisches Patentamt
European Patent Office
Office européen des brevets

(11) **EP 3 543 745 B1**

(12) **FASCICULE DE BREVET EUROPEEN**

(45) Date de publication et mention de la délivrance du brevet:
**02.12.2020 Bulletin 2020/49**

(51) Int Cl.:
***G01S 19/22*** *(2010.01)*     ***G01S 19/36*** *(2010.01)*

(21) Numéro de dépôt: **19163952.5**

(22) Date de dépôt: **20.03.2019**

(54) **DISPOSITIF MULTI-ANTENNES POUR LA REJECTION DE MULTI-TRAJETS DANS UN SYSTEME DE NAVIGATION PAR SATELLITE ET PROCEDE ASSOCIE**

MULTIANTENNENVORRICHTUNG FÜR DIE UNTERDRÜCKUNG VON MEHRWEGESIGNALEN IN EINEM SATELLITEN-NAVIGATIONSSYSTEM, UND ENTSPRECHENDES VERFAHREN

MULTI-ANTENNA DEVICE FOR REJECTION OF MULTIPATHS IN A SATELLITE NAVIGATION SYSTEM AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2018 FR 1800238**

(43) Date de publication de la demande:
**25.09.2019 Bulletin 2019/39**

(73) Titulaires:
- **Thales**
  **92400 Courbevoie (FR)**
- **Centre National d'Etudes Spatiales**
  **75001 Paris (FR)**

(72) Inventeurs:
- **CARRIE, Guillaume**
  **31000 Toulouse (FR)**
- **BERLAND, Céline**
  **31000 Toulouse (FR)**
- **BARBIERO, Franck**
  **31400 Toulouse (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2012/025306**     **US-A1- 2012 286 994**
**US-B2- 8 655 298**

- **KONOVALTSEV ANDRIY ET AL: "Autonomous Spoofing Detection and Mitigation with a Miniaturized Adaptive Antenna Array", GNSS 2014 - PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 20109, USA, 12 septembre 2014 (2014-09-12), pages 2853-2861, XP056007804,**
- **ZILI XU ET AL: "A Maximum-likelihood Based Mutual Coupling Calibration Algorithm in the Presence of Multipath for GPS Antenna Array", GNSS 2011 - PROCEEDINGS OF THE 24TH INTERNATIONAL TECHNICAL MEETING OF THE SATELLITE DIVISION OF THE INSTITUTE OF NAVIGATION (ION GNSS 2011), THE INSTITUTE OF NAVIGATION, 8551 RIXLEW LANE SUITE 360 MANASSAS, VA 20109, USA, 23 septembre 2011 (2011-09-23), page 1111, XP056000704,**

**Description**

Le domaine de l'invention concerne les systèmes de navigation par satellite et plus particulièrement les dispositifs de radiolocalisation par calcul de temps de propagation des signaux émis par les satellites.

On entend ici par « système de navigation par satellite » tout système dédié à la navigation large zone, comme par exemple les systèmes existants GNSS (« Global Navigation Satellite System ») appelés GPS, GLONASS ou GALILEO, ainsi que tous leurs équivalents et dérivés. L'homme du métier connaît bien le principe de localisation des systèmes de navigation par satellite. Le signal radiofréquence émis par un satellite est codé et on utilise le temps mis par ce signal pour atteindre le récepteur à localiser pour déterminer la distance entre ce satellite et ce récepteur, appelée pseudo-distance. La précision des systèmes de navigation par satellite est affectée par un certain nombre d'erreurs. Ces erreurs peuvent se décliner en deux catégories : les contributions globales et les contributions locales. On peut citer pour les contributions globales, les erreurs liées au passage des ondes électromagnétiques dans l'ionosphère et les erreurs liées aux satellites (erreurs d'orbite et erreurs d'horloge). En ce qui concerne les contributions locales, on peut citer les erreurs liées au passage des ondes électromagnétiques dans la troposphère, les erreurs de réflexion des signaux, les erreurs liées aux interférences, les erreurs dues aux zones blanches et le bruit des récepteurs.

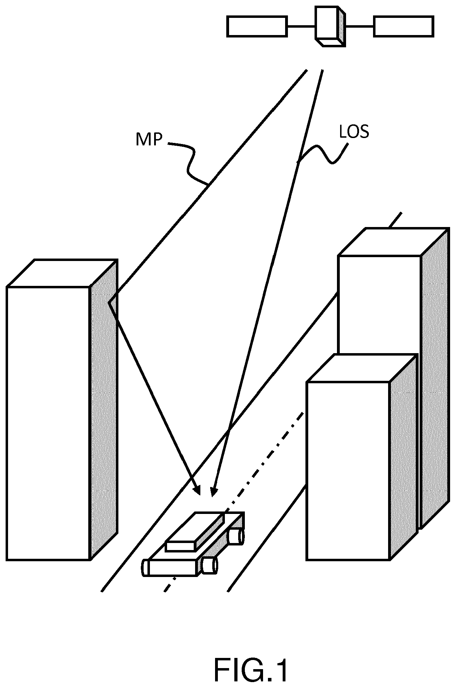

En environnement urbain comme illustré par la figure 1, le dispositif de radiolocalisation est particulièrement affecté par le phénomène de réflexion des signaux sur les obstacles urbains comme par exemple les façades d'immeuble. La figure 1 représente un véhicule automobile circulant en environnement urbain et un satellite émettant des signaux de radiolocalisation. Les multi-trajets MP sur les signaux utiles LOS constituent les défauts prépondérants pour la localisation. En effet, les signaux muti-trajets MP introduisent un biais dans l'estimation du temps de propagation des signaux ce qui provoque des erreurs de localisation du récepteur. Il est important de pouvoir supprimer ou estimer ces multi-trajets pour améliorer la précision de localisation des dispositifs de localisation.

La demande de brevet internationale WO 2012/025306 décrit un dispositif de réception de signaux de radionavigation par satellite apte à estimer et supprimer les multi-trajets affectant le signal reçu. Un tel dispositif comprend plusieurs antennes ou capteurs et plusieurs corrélateurs.

Un inconvénient de cette solution est qu'elle met en œuvre un procédé d'estimation des paramètres des signaux multi-trajets qui suppose que tous les capteurs du dispositif sont identiques et en particulier, qu'ils présentent tous des diagrammes de rayonnement identiques.

Cependant, dans la réalité, ce constat n'est pas vérifié et, au contraire, les diagrammes de rayonnement sont différents, notamment en raison de phénomènes de couplage. L'absence de prise en compte de ces différences peut conduire à rendre inopérantes la solution décrite dans la demande précitée.

L'invention propose un perfectionnement du procédé et du dispositif décrits dans la demande WO 2012/025306 pour prendre en compte les différences de diagrammes de rayonnement des différentes antennes du dispositif de réception.

Ainsi, l'invention a pour objet un procédé d'estimation des paramètres de signal utile et de signaux multi-trajet originaires d'un signal de radiolocalisation émis par un satellite, au moyen d'un dispositif de localisation comprenant au moins deux capteurs aptes à recevoir ledit signal, chacun desdits capteurs étant connecté à au moins deux lignes de traitement des signaux, chaque ligne de traitement comprenant un corrélateur et au moins une ligne à retard apte à introduire un retard correspondant à un multiple de la durée d'intégration des corrélateurs, le procédé comprenant les étapes de :

- Corréler le signal reçu par lesdits capteurs avec un code local au moyen de corrélateurs,
- Construire, pour chaque capteur, une fonction d'intercorrélation échantillonnée du signal reçu avec le code local, pour différents instants post-corrélation,
- Déterminer une fonction d'intercorrélation spatio-temporelle à partir de la concaténation des fonctions d'intercorrélation obtenues à l'étape précédente pour chaque capteur,
- Exécuter itérativement, pour chaque signal multi-trajet et le signal utile les sous-étapes de :

  • Soustraire, à la fonction d'intercorrélation spatio-temporelle, le ou les modèles paramétriques de signaux estimés aux itérations précédentes,
  • Estimer les paramètres représentatifs d'un signal multi-trajet ou du signal utile par application d'un algorithme du maximum de vraisemblance au résultat de la soustraction précédente, en appliquant les sous-étapes de :

    ✓ Estimer la direction d'arrivée du signal en exploitant conjointement tous les capteurs,
    ✓ Estimer l'amplitude complexe du signal indépendamment pour chaque capteur, en utilisant la direction d'arrivée estimée,
    ✓ Projeter l'amplitude complexe estimée sur le sous-espace défini par la direction d'arrivée estimée pour conserver dans l'estimation indépendante de l'amplitude complexe, la composante correspondant à la direction d'arrivée estimée à l'étape précédente.

Selon un aspect particulier de l'invention, lesdits paramètres représentatifs incluent le retard de propagation, la fréquence Doppler et la direction d'arrivée d'un signal.

L'invention a aussi pour objet un dispositif de localisation apte à discriminer un signal utile de signaux multi-trajets, le dispositif comprenant au moins deux capteurs de signaux de radiolocalisation émis par un satellite, chacun desdits capteurs étant connecté à au moins deux lignes de traitement des signaux, chaque ligne de traitement comprenant un corrélateur et au moins une ligne à retard apte à introduire un retard correspondant à un multiple de la durée d'intégration des corrélateurs, le dispositif comprenant des moyens de traitement des signaux configurés pour mettre en œuvre le procédé d'estimation des paramètres de signal utile et de signaux multi-trajet originaires d'un signal de radiolocalisation émis par un satellite selon la définition ci-dessus.

Selon un aspect particulier de l'invention, un corrélateur d'une première ligne de traitement est espacé d'une fraction de la période symbole du code d'étalement par rapport au corrélateur d'une seconde ligne de traitement.

Selon un aspect particulier de l'invention, l'algorithme d'estimation du maximum de vraisemblance est de type « SAGE ».

D'autres caractéristiques et avantages de la présente invention apparaîtront mieux à la lecture de la description qui suit en relation aux dessins annexés qui représentent :

- La figure 1, un mobile recevant les signaux de radiolocalisation émis par un satellite dans un environnement urbain,
- La figure 2, un schéma d'une architecture de dispositif de localisation selon l'invention,
- La figure 3, plusieurs diagrammes illustrant une fonction de corrélation mesurée sur chaque voie de réception pour différents codes d'étalement PRN,
- La figure 4, un organigramme décrivant les étapes principales du procédé selon l'invention.

On reprend ici la description du dispositif de localisation décrit dans la demande WO 2012/025306. Le dispositif de localisation selon la présente invention est basée sur le dispositif décrit antérieurement dans la demande précitée et apporte des améliorations par rapport à celui-ci.

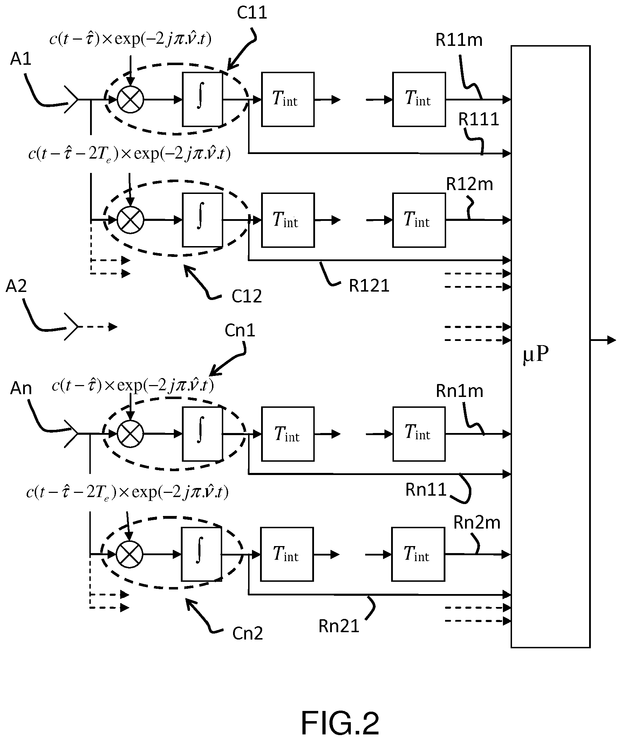

La figure 2 décrit une architecture d'un dispositif de localisation selon l'invention.

Le dispositif de localisation selon l'invention comporte une pluralité de capteurs A1, A2, An. Ces capteurs sont des antennes élémentaires conçues pour capter les signaux de radiolocalisation émis par les satellites d'un système de navigation tel que le système GPS ou Galileo. Le réseau de capteurs A1, A2, An permet d'obtenir l'information directionnelle par échantillonnage spatial du front d'onde reçu.

Le dispositif de localisation comporte également des moyens de traitement des signaux reçus par l'ensemble des capteurs A1, A2 à An. Des lignes de traitement de signal sont connectées en sortie de chaque capteur.

Nous décrivons dans ce paragraphe la chaîne de traitement du signal comprise entre la sortie du capteur A1 et les moyens de calcul mettant en œuvre l'algorithme du maximum de vraisemblance. La présence de l'étage RF, de descente en fréquence et d'un éventuel convertisseur analogique-numérique en sortie de chaque antenne n'étant pas utile à la compréhension de l'invention, ces éléments ne sont pas représentés sur la figure 2, le lecteur pourra les considérer comme faisant partie des capteurs. Le capteur A1 est relié à une première ligne comportant successivement un corrélateur C11 (constitué d'un multiplicateur et d'un intégrateur), puis une première ligne de retard R111 et une m$^{ième}$ ligne de retard R11m, les dites lignes étant connectées en parallèle. La sortie des lignes de retard est connectée à des moyens de calcul pouvant mettre en œuvre un algorithme de maximum de vraisemblance.

L'ensemble des corrélateurs permet d'obtenir une estimation de la fonction d'intercorrélation entre le code local (généré dans le récepteur) et le code reçu afin de pouvoir estimer les retards des différents signaux.

Les lignes à retard vont échantillonner le signal post-corrélation avec une période d'échantillonnage de Tint afin de pouvoir estimer les fréquences Doppler des différents signaux.

A la suite du traitement de corrélation, des lignes de retard R111 et R11m sont connectées en sortie de l'intégrateur. Ces lignes de retard sont disposées en parallèles. L'écart introduit par chaque ligne de retard correspond toujours à un multiple de la durée d'intégration du corrélateur. A titre d'exemple non limitatif, la première ligne de retard R111 n'introduit pas de retard, un retard de Tint est introduit par la seconde ligne de retard R112 et la m$^{ième}$ ligne de retard R11m introduit un retard de (m-1)Tint. La ligne de traitement peut comporter un nombre m de lignes de retard en parallèle, chaque ligne de retard étant espacée d'une durée Tint correspondant à la durée d'intégration des corrélateurs. Les lignes de retard peuvent être élaborées par tout moyen de traitement du signal en analogique comme numérique. De même, le capteur A1 est relié à une seconde ligne de traitement comportant successivement un corrélateur C12 espacé d'une fraction de la période symbole du code d'étalement (durée notée Te sur la figure 2) par rapport au corrélateur C11 et m lignes de retard R121 à R12m agencées de la même façon que la première ligne de traitement. Le capteur A1 peut être relié à des troisième et quatrième lignes de traitement et voire plus qui ne sont pas présentées sur la figure 2. Les lignes de traitement comportant les corrélateurs C11 et C12 sont identiques. Plus généralement, les structures des lignes de traitement en sortie de chaque antenne sont identiques entre elles.

Selon un mode de réalisation plus simple, les lignes de traitement peuvent ne pas comporter de lignes de retard. Dans ce cas, les sorties des corrélateurs sont directement connectées aux moyens de calcul μP mettant en œuvre un algorithme de maximum de vraisemblance.

Le dispositif de localisation comporte une pluralité de capteurs A1 à An et chaque capteur est connecté à une ligne de traitement telle que décrite précédemment à la suite du capteur A1. Les capteurs et les lignes de traitement, comportant les lignes de retard, forment un réseau spatio-temporel multi-corrélateurs.

Les lignes de retard sont reliées directement sur de multiples entrées à des moyens de calcul et de traitement μP mettant en œuvre un algorithme de maximum de vraisemblance. Plusieurs types d'algorithme de maximum de vraisemblance peuvent être mis en œuvre. De préférence, un algorithme de type SAGE traite les signaux issus des lignes de retard dans le but d'estimer les paramètres caractéristiques des signaux reçus (direction incidente en azimut et élévation, retard, Doppler par exemple). L'estimation de ces paramètres permet de discriminer le signal utile des signaux multi-trajets. L'algorithme de maximum de vraisemblance est apte à traiter les signaux provenant du système implémenté selon une architecture spatio-temporelle multi-corrélateurs.

Dans la présente invention, contrairement aux hypothèses prises dans la demande WO 2012/025306, on suppose que les capteurs A1, A2, An sont tous différents et présentent ainsi des diagrammes de rayonnement différents.

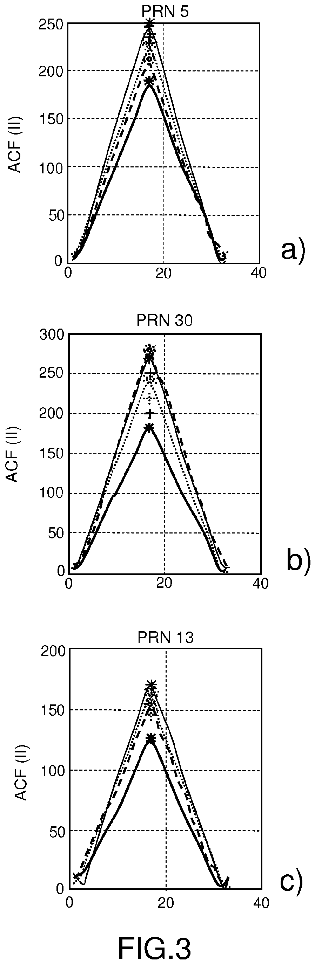

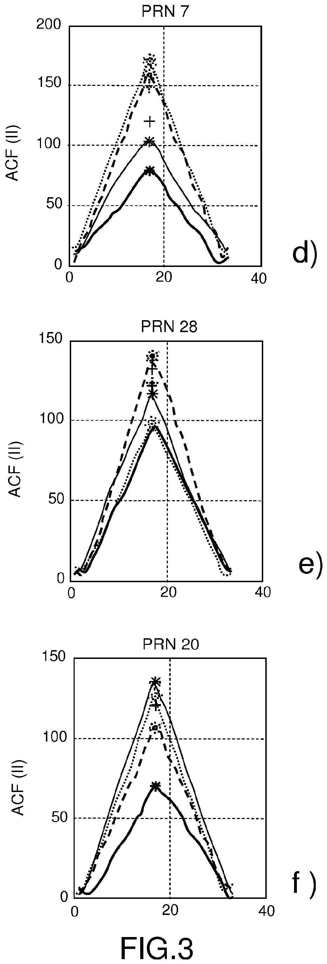

Un exemple de modules de fonctions de corrélation mesurées au moyen d'un dispositif tel que celui de la figure 2 est illustré sur la figure 3 pour un dispositif comprenant quatre antennes, pour différentes séquences de codes d'étalement PRN au même instant. Sur chacun des six diagrammes de la figure 3, on a représenté les fonctions de corrélation obtenues pour chacune des quatre voies de réception. On remarque sur ces figures que les fonctions de corrélation mesurées sont différentes pour chaque voie de réception et sont aussi différentes selon le code d'étalement PRN utilisé.

Il résulte de ces deux diagrammes que les gains diffèrent entre les différentes antennes d'un dispositif en fonction de la direction d'arrivée des signaux. Ainsi, l'application de la méthode d'estimation des paramètres des signaux multi-trajets, telle que décrite dans la demande WO 2012/025306, est inopérante car elle conduit à faire virtuellement apparaitre des signaux non reçus. En effet, cette méthode considère que les gains d'antennes sont identiques pour chacune des voies de réception.

La figure 3 identifie en outre sous forme de symboles « + » les niveaux théoriques reçus, prenant en compte des mesures en chambre anéchoïque, des diagrammes de rayonnement des antennes. On peut y vérifier que ces niveaux ne se superposent pas aux pics de corrélation des signaux mesurés et que le classement des voies n'est pas non plus reproduit.

Enfin, cette figure identifie sous forme de symboles « * » les niveaux estimés des signaux reçus au moyen de la présente invention. On peut y vérifier cette fois que les niveaux estimés correspondent bien aux niveaux reçus sur les quatre voies de réception, ce qui valide l'apport de l'invention.

On détaille à présent les étapes du calcul des paramètres des signaux (trajet direct et multi-trajets) reçus par le dispositif de la figure 2.

L'expression y(t) du signal ramené en bande de base en sortie d'antennes identiques peut se mettre sous la forme :

$$\mathbf{y}(t) = \sum_{l=0}^{L-1} \mathbf{a}(\theta_l, \varphi_l) \times \gamma_l \times \exp(2j\pi.\nu_l.t) \times c(t - \tau_l) + \mathbf{b}(t)$$

où l'indice « l » correspond au nombre de trajets reçus pour un même signal (trajet direct et échos), le numéro '0' étant affecté au trajet direct, $a(\theta,\varphi)$ représente le vecteur directionnel du réseau d'antennes en fonction des angles d'arrivée $\theta$ et $\varphi$ de chaque signal. $\gamma_l$ représente l'amplitude complexe du signal, $\nu_l$ sa fréquence Doppler, $\tau_l$ son retard de propagation, $c(.)$ le code d'étalement et enfin **b**(.) représente le vecteur bruit thermique en sortie de chaque antenne.

Ce signal traverse ensuite les corrélateurs représentés sur la figure 2. L'expression **X** du signal reçu post-corrélation pour l'architecture STAP multi-corrélateurs proposée peut se mettre sous la forme vectorisée suivante :

$$\mathbf{X} = \sum_{l=0}^{L-1} \mathbf{X}_l(\psi_l) + \mathbf{b}_{mp,T_{int}}$$

avec

$$\psi_l = [\tilde{\gamma}_l, \theta_l, \varphi_l, \tau_{rl}, \nu_{rl}]^T$$

$$\mathbf{X}_l(\psi_l) = \tilde{\gamma}_l \times \mathbf{a}(\theta_l, \varphi_l) \otimes \tilde{\mathbf{R}}_C(\varepsilon_\tau - \tau_{rl}, \varepsilon_\nu - \nu_{rl})$$

On rappelle que m représente le nombre de lignes à retard par ligne de traitement, p désigne le nombre total de lignes de traitements par antenne et n représente le nombre d'antennes.

$\mathbf{b}_{mp,Tint}$ représente le vecteur bruit thermique en sortie de chaque antenne intégré sur une durée $T_{int}$, $\psi_l$ représente le vecteur des paramètres à estimer pour le trajet 'l' et $\mathbf{X}$, $\mathbf{X}_l$ et $\mathbf{b}_{mp,Tint}$ sont de dimension $m \times n \times p$.

On note $\tau_{rl}$ et $v_{rl}$ les retards et décalages Doppler relatifs du trajet 'l' par rapport au trajet direct. Le corrélateur est asservi sur le trajet direct et commet une erreur $\varepsilon_\tau$ sur le code (retard compté positivement) par rapport au trajet de référence d'indice '0' et $\varepsilon_v$ sur la fréquence du trajet direct. $\tilde{\gamma}_l$ désigne l'amplitude complexe du signal post corrélation. La notation $(.)^T$ représente la transposée d'un vecteur, $(.)^H$ représente la transposée-conjuguée d'un vecteur et l'opérateur $\otimes$ représente le produit de Kronecker. La matrice de corrélation temporelle $\tilde{\mathbf{R}}_C$ du signal est construite de la façon suivante :

- Dans un premier temps, les sorties multi-corrélateurs sont concaténées dans un vecteur colonne pour reconstruire une fonction d'intercorrélation échantillonnée du signal reçu avec le code local.
- Ces fonctions d'intercorrélation obtenues pour différents instants post-corrélation sont concaténées toujours dans un vecteur colonne de manière à tracer l'évolution temporelle des fonctions d'intercorrélation. Cette évolution temporelle permettra de caractériser les Doppler relatifs des échos.

$$\tilde{\mathbf{R}}_C\left(\varepsilon_\tau - \tau_{rl}, \varepsilon_v - v_{rl}\right) = \begin{bmatrix} r(\varepsilon_\tau - \tau_{rl,1} + \frac{(p-1)}{2}T_e) \times \exp[-2j\pi.(\varepsilon_v - v_{rl}).T_{int}] \\ \vdots \\ r(\varepsilon_\tau - \tau_{rl,1} - \frac{(p-1)}{2}T_e) \times \exp[-2j\pi.(\varepsilon_v - v_{rl}).T_{int}] \\ r(\varepsilon_\tau - \tau_{rl,2} + \frac{(p-1)}{2}T_e) \times \exp[-2j\pi.(\varepsilon_v - v_{rl}).2.T_{int}] \\ \vdots \\ r(\varepsilon_\tau - \tau_{rl,2} - \frac{(p-1)}{2}T_e) \times \exp[-2j\pi.(\varepsilon_v - v_{rl}).2.T_{int}] \\ \vdots \\ r(\varepsilon_\tau - \tau_{rl,m} - \frac{(p-1)}{2}T_e) \times \exp[-2j\pi.(\varepsilon_v - v_{rl}).m.T_{int}] \end{bmatrix}$$

avec $r()$ la fonction d'intercorrélation d'un code reçu avec sa réplique locale.

Les décalages Doppler relatifs sont supposés constants sur la durée de traitement $m.T_{int}$, les retards relatifs

évoluent comme : $\quad \tau_{rl,m} = \tau_{rl,0} + m\dfrac{v_{rl}}{f_C}T_{int} \quad$ où $f_c$ désigne la fréquence porteuse du signal.

Selon l'architecture spatio-temporelle multi-corrélateurs proposée sur la figure 2, la matrice d'autocorrélation temporelle $\tilde{\mathbf{R}}_P$ du bruit post-corrélation est égale à celle du code local pré-corrélation et est indépendante du Doppler, elle s'écrit :

$$\tilde{\mathbf{R}}_P = \begin{bmatrix} r(0) & r(Te) & \cdots & \cdots & r(p.Te) \\ r(Te) & r(0) & r(Te) & & \vdots \\ \vdots & r(Te) & r(0) & r(Te) & \vdots \\ \vdots & & r(Te) & r(0) & r(Te) \\ r(p.Te) & \cdots & \cdots & r(Te) & r(0) \end{bmatrix}$$

En supposant le bruit blanc spatialement, la matrice d'autocorrélation spatio-temporelle du bruit post corrélation s'écrit :

$$\mathrm{E}\left(\mathbf{b}_{NP,T_{int}} \times \mathbf{b}_{NP,T_{int}}^H\right) = \mathbf{C} = \tilde{\sigma} \times \mathbf{I}_{mn} \otimes \tilde{\mathbf{R}}_P$$

Enfin, on note $\check{\mathbf{R}}_C^H$ la matrice de corrélation spatio-temporelle

$$\check{\mathbf{R}}_C^H\left(\varepsilon_\tau - \tau_{rl}, \varepsilon_v - v_{rl}\right) = \tilde{\mathbf{R}}_C^H\left(\varepsilon_\tau - \tau_{rl}, \varepsilon_v - v_{rl}\right) \times \left[\mathbf{I}_m \otimes \tilde{\mathbf{R}}_P^{-1}\right]$$

soit :

$$\check{\mathbf{R}}_C^H\left(\varepsilon_\tau - \tau_{rl}, \varepsilon_v - v_{rl}\right) = \left\{ \begin{array}{c} \left[\left(\begin{array}{c} r(\varepsilon_\tau - \tau_{rl,1} + \frac{(p-1)}{2}T_e) \\ \vdots \\ r(\varepsilon_\tau - \tau_{rl,1} - \frac{(p-1)}{2}T_e) \end{array}\right)^H \times \tilde{\mathbf{R}}_P^{-1} \times \exp\left[-2j\pi.(\varepsilon_v - v_{rl}).T_{\mathrm{int}}\right]\right]^T \\ \left[\left(\begin{array}{c} r(\varepsilon_\tau - \tau_{rl,2} + \frac{(p-1)}{2}T_e) \\ \vdots \\ r(\varepsilon_\tau - \tau_{rl,2} - \frac{(p-1)}{2}T_e) \end{array}\right)^H \times \tilde{\mathbf{R}}_P^{-1} \times \exp\left[-2j\pi.(\varepsilon_v - v_{rl}).2.T_{\mathrm{int}}\right]\right]^T \\ \vdots \\ \left[\left(\begin{array}{c} r(\varepsilon_\tau - \tau_{rl,N} + \frac{(p-1)}{2}T_e) \\ \vdots \\ r(\varepsilon_\tau - \tau_{rl,N} - \frac{(p-1)}{2}T_e) \end{array}\right)^H \times \tilde{\mathbf{R}}_P^{-1} \times \exp\left[-2j\pi.(\varepsilon_v - v_{rl}).m.T_{\mathrm{int}}\right]\right]^T \end{array} \right\}^T$$

Le principe de l'algorithme SAGE consiste à décomposer le signal reçu sur l'ensemble des trajets et à estimer, par maximum de vraisemblance, les paramètres de chaque trajet.

Pour l'architecture et le modèle de signal proposé, l'opposé de la fonction Log-vraisemblance $\Lambda_l(\psi_l)$ pour le trajet '*l*' s'écrit à une constante et un coefficient multiplicatif prés :

$$\Lambda_l(\psi_l) = \left(\mathbf{X}_l(\psi_l) - \hat{\mathbf{X}}_l\right)^H \times \mathbf{C}^{-1} \times \left(\mathbf{X}_l(\psi_l) - \hat{\mathbf{X}}_l\right)$$

où la notation ^ désigne l'estimée d'une grandeur. On montre alors que maximiser la vraisemblance pour le trajet '*l*' revient à maximiser le terme $\tilde{\Lambda}_l(\psi_l)$ définit par :

$$\boxed{\tilde{\Lambda}_l(\psi_l) = \frac{\left|\left[\mathbf{a}^H(\theta_l, \varphi_l) \otimes \check{\mathbf{R}}_C^H\left(\varepsilon_\tau - \tau_{rl}, \varepsilon_v - v_{rl}\right)\right] \times \hat{\mathbf{X}}_l\right|^2}{m \times \check{\mathbf{R}}_C^H\left(\varepsilon_\tau - \tau_{rl}, \varepsilon_v - v_{rl}\right) \times \tilde{\mathbf{R}}_C\left(\varepsilon_\tau - \tau_{rl}, \varepsilon_v - v_{rl}\right)}}$$

La phase « E-Step » de l'algorithme SAGE consiste à isoler un trajet particulier, et la phase « M-Step » consiste à estimer les paramètres du trajet par maximum de vraisemblance. On boucle alors sur l'ensemble des trajets puis on reboucle itérativement jusqu'à convergence de l'algorithme. Le critère de convergence porte généralement sur la norme de la mise à jour du vecteur des paramètres à estimer. On peut également ajouter un critère sur l'amplitude du trajet à estimer pour le distinguer du bruit.

La mise en équation des phases « E-Step » et « M-Step » en mode poursuite est la suivante.

Lors de la phase « E-Step », le modèle paramétrique des signaux estimés aux itérations précédentes est soustrait aux signaux reçus de la façon suivante :

$$\hat{\mathbf{X}}_{l_0} = \mathbf{X} - \sum_{\substack{l=0 \\ l \neq l_0}}^{L-1} \mathbf{X}_l(\hat{\psi}_l)$$

Le modèle paramétrique de signal est mis à jour de la façon suivante pour prendre en compte des amplitudes du signal reçu potentiellement différentes sur les différentes antennes de réception :

$$\psi_l = \left[\tilde{\gamma}_l, \theta_l, \varphi_l, \tau_{rl}, v_{rl}\right]^T$$

$$\mathbf{X}_l(\psi_l) = \hat{\tilde{\gamma}}_l \otimes \tilde{\mathbf{R}}_C\left(\varepsilon_\tau - \tau_{rl}, \varepsilon_v - v_{rl}\right)$$

Sous cette dernière forme, l'amplitude complexe n'est plus un scalaire mais un vecteur de dimension égale au nombre de voies de réception du dispositif selon l'invention.

Lors de la phase « M-Step », les paramètres du signal multi-trajet suivant (parmi les L-1 signaux multi-trajets et le signal utile) sont estimés de la façon suivante.

En premier lieu, on recherche le retard et le Doppler relatifs du signal à estimer. Afin de réduire la charge calculatoire, on construit dans un premier temps le vecteur $\mathbf{Y}_{l_0}$ qui exploite les estimées des DOA (direction d'arrivée des signaux), puis on maximise les vraisemblances pour le retard et le Doppler relatif au voisinage des solutions de l'itération précédente :

$$\mathbf{Y}_{l_0} = \left[\mathbf{a}(\hat{\theta}_l, \hat{\varphi}_l)^H \otimes \mathbf{I}_{NP}\right] \times \hat{\mathbf{X}}_{l_0}$$

$$\hat{\tau}_{rl_0} = \arg\max_{\tau_{rl}}\left(\frac{\left|\breve{\mathbf{R}}_C^H\left(\varepsilon_\tau - \tau_{rl}, \hat{\varepsilon}_v - \hat{v}_{rl}\right) \times \mathbf{Y}_{l_0}\right|^2}{\breve{\mathbf{R}}_C^H\left(\varepsilon_\tau - \tau_{rl}, \hat{\varepsilon}_v - \hat{v}_{rl}\right) \times \tilde{\mathbf{R}}_C\left(\varepsilon_\tau - \tau_{rl}, \hat{\varepsilon}_v - \hat{v}_{rl}\right)}\right)$$

$$\hat{v}_{rl_0} = \arg\max_{v_{rl}}\left(\frac{\left|\breve{\mathbf{R}}_C^H\left(\hat{\varepsilon}_\tau - \hat{\tau}_{rl}, \varepsilon_v - v_{rl}\right) \times \mathbf{Y}_{l_0}\right|^2}{\breve{\mathbf{R}}_C^H\left(\hat{\varepsilon}_\tau - \hat{\tau}_{rl}, \varepsilon_v - v_{rl}\right) \times \tilde{\mathbf{R}}_C\left(\hat{\varepsilon}_\tau - \hat{\tau}_{rl}, \varepsilon_v - v_{rl}\right)}\right)$$

Ensuite, on recherche les directions d'arrivée (DOA) du signal à estimer sur les différents capteurs. Afin de réduire la charge calculatoire, on construit dans un premier temps le vecteur $\mathbf{Z}_{l_0}$ qui exploite les estimées des retards et Doppler relatifs, puis on maximise les vraisemblances pour les DOA au voisinage des solutions de l'itération précédente :

$$\mathbf{Z}_{l_0} = \left[\mathbf{I}_m \otimes \breve{\mathbf{R}}_C^H\left(\hat{\varepsilon}_\tau - \hat{\tau}_{rl}, \hat{\varepsilon}_v - \hat{v}_{rl}\right)\right] \times \hat{\mathbf{X}}_{l_0}$$

$$\hat{\theta}_{l_0} = \arg\max_{\theta_l}\left(\left|\mathbf{a}(\theta_l, \hat{\varphi}_l)^H \times \mathbf{Z}_{l_0}\right|\right)$$

$$\hat{\varphi}_{l_0} = \arg\max_{\varphi_l}\left(\left|\mathbf{a}(\hat{\theta}_l, \varphi_l)^H \times \mathbf{Z}_{l_0}\right|\right)$$

Enfin, on détermine l'amplitude complexe post-corrélation du signal à estimer pour chaque capteur en supposant les amplitudes différentes, a priori, pour chaque capteur.

Pour cela, on effectue une estimation indépendante des amplitudes complexes sur les différentes antennes :

$$\hat{\breve{\gamma}}_{l\_temp} = \frac{\left[\mathbf{I}_m \otimes \breve{\mathbf{R}}_C\left(\hat{\varepsilon}_\tau - \hat{\tau}_{rl}, \hat{\varepsilon}_v - \hat{v}_{rl}\right)\right]^H \times \hat{\mathbf{X}}_l}{\breve{\mathbf{R}}_C^H\left(\hat{\varepsilon}_\tau - \hat{\tau}_{rl}, \hat{\varepsilon}_v - \hat{v}_{rl}\right) \times \breve{\mathbf{R}}_C\left(\hat{\varepsilon}_\tau - \hat{\tau}_{rl}, \hat{\varepsilon}_v - \hat{v}_{rl}\right)}$$

Puis, on projette le vecteur résultant sur le sous-espace défini par la direction d'arrivée estimée :

$$\mathbf{a}_l = \mathbf{a}(\hat{\theta}_l, \hat{\varphi}_l) \bullet \left|\hat{\breve{\gamma}}_{l\_temp}\right|$$

$$\hat{\breve{\gamma}}_l = \frac{\left(\mathbf{a}_l^H \times \hat{\breve{\gamma}}_{l\_temp}\right) \times \mathbf{a}_l}{\mathbf{a}_l^H \times \mathbf{a}_l}$$

Où l'opérateur «•» désigne un produit de vecteurs terme à terme et ou l'amplitude complexe estimée à la dernière étape n'est plus un scalaire mais un vecteur de dimension le nombre de voies de réception du dispositif selon l'invention.

Autrement dit, on conserve, dans l'estimation indépendante de l'amplitude complexe, la composante correspondant à la direction d'arrivée estimée à l'étape précédente. Ainsi, on privilégie la direction d'arrivée estimée.

En pratique, il est entendu que la matrice de corrélation spatio-temporelle $\breve{\mathbf{R}}_C^H$ ne sera pas à recalculer numériquement à la volée lors du traitement par le récepteur afin de ne pas alourdir la charge calculatoire. Au pire, des valeurs numériques pourront être pré-calculées et stockées, voire, sous certaines hypothèses, une solution analytique pourra être proposée.

Par exemple, si on néglige l'évolution du retard en fonction du Doppler relatif (ce qui revient à négliger une variation de l'ordre de $6.10^{-10}$ s pour un Doppler de 100 Hz et une durée d'observation de 10 ms) et que le terme ($\varepsilon_\tau$-$\tau_{rl}$) est multiple du pas de temps entre les corrélateurs, alors chaque bloc (terme correspondant à 1 ligne à retard post-corrélation) de la matrice $\breve{\mathbf{R}}_C$ se ramène à un Dirac multiplié par un terme de phase :

$$\breve{\mathbf{R}}_C\left(k.T_e, \varepsilon_v - v_{rl}\right) \approx \left\{ \begin{array}{c} \boldsymbol{\delta}_P(k) \times \exp\left[-2j\pi.(\varepsilon_v - v_{rl}).T_{\text{int}}\right] \\ \boldsymbol{\delta}_P(k) \times \exp\left[-2j\pi.(\varepsilon_v - v_{rl}).2.T_{\text{int}}\right] \\ \vdots \\ \boldsymbol{\delta}_P(k) \times \exp\left[-2j\pi.(\varepsilon_v - v_{rl}).m.T_{\text{int}}\right] \end{array} \right\}^T$$

avec :

$$\boldsymbol{\delta}_p(k) = \underbrace{\begin{bmatrix} 0 & \cdots & 0 & 1 & 0 & \cdots & 0 \end{bmatrix}}_{-\frac{p-1}{2} \quad \cdots \quad k-1 \; k \; k+1 \quad \cdots \quad \frac{p-1}{2}}^T$$

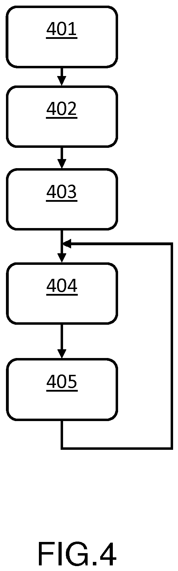

La figure 4 schématise, sur un organigramme, les étapes principales du procédé d'estimation des paramètres des signaux multi-trajets et du signal utile, selon l'invention.

Une première étape 401 du procédé consiste à corréler le signal reçu par les capteurs avec un code local au moyen des corrélateurs du dispositif.

Une deuxième étape 402 du procédé consiste à construire, pour chaque capteur, une fonction d'intercorrélation échantillonnée du signal reçu avec le code local.

Une troisième étape 403 du procédé consiste à déterminer une fonction d'intercorrélation spatio-temporelle à partir de la concaténation des fonctions d'intercorrélation obtenues à l'étape précédente pour chaque capteur.

Puis, on estime, de façon itérative, les paramètres représentatifs du signal utile et des signaux multi-trajet par application d'un algorithme de maximum de vraisemblance.

Pour cela, à chaque itération, on soustrait lors de l'étape 404, à la fonction d'intercorrélation spatio-temporelle, le ou les modèles paramétriques de signaux dont les paramètres représentatifs ont été estimés aux itérations précédentes.

Puis, on estime à l'étape 405 les paramètres représentatifs d'un signal multi-trajet ou du signal utile par application d'un algorithme du maximum de vraisemblance au résultat de la soustraction précédente. Cette étape 405 comprend au moins les sous-étapes suivantes :

- Estimer la direction d'arrivée du signal en exploitant conjointement tous les capteurs,
- Estimer l'amplitude complexe du signal indépendamment pour chaque capteur,
- Projeter l'amplitude complexe estimée sur le sous-espace défini par la direction d'arrivée estimée.

L'invention permet de discriminer le signal utile des signaux multi-trajets en prenant en compte les caractéristiques différentes des voies de réception du dispositif. Cet avantage est obtenu de par l'estimation indépendante de l'amplitude complexe du signal reçu par chaque capteur.

L'invention s'applique aux stations sol de référence ou d'observation des constellations de satellites de navigation. Cette invention peut être utilisée dans des terminaux mobiles pour améliorer la solution de navigation dans des environnements urbains, voire aéroportuaires.

## Revendications

1. Procédé d'estimation des paramètres de signal utile et de signaux multi-trajet originaires d'un signal de radiolocalisation émis par un satellite, au moyen d'un dispositif de localisation comprenant au moins deux capteurs aptes à recevoir ledit signal, chacun desdits capteurs étant connecté à au moins deux lignes de traitement des signaux, chaque ligne de traitement comprenant un corrélateur (C11,C12) et au moins une ligne à retard (R11m) apte à introduire un retard correspondant à un multiple de la durée d'intégration des corrélateurs, le procédé comprenant les étapes de :

   - Corréler (401) le signal reçu par lesdits capteurs avec un code local au moyen de corrélateurs,
   - Construire (402), pour chaque capteur, une fonction d'intercorrélation échantillonnée du signal reçu avec le code local, pour différents instants post-corrélation,
   - Déterminer (403) une fonction d'intercorrélation spatio-temporelle à partir de la concaténation des fonctions d'intercorrélation obtenues à l'étape précédente pour chaque capteur,
   - Exécuter itérativement, pour chaque signal multi-trajet et le signal utile les sous-étapes de :

      • Soustraire (404), à la fonction d'intercorrélation spatio-temporelle, le ou les modèles paramétriques de signaux estimés aux itérations précédentes,
      • Estimer (405) les paramètres représentatifs d'un signal multi-trajet ou du signal utile par application d'un algorithme du maximum de vraisemblance au résultat de la soustraction précédente, le procédé étant **caractérisé en ce que** les dits paramètres sont estimés en appliquant les sous-étapes de :

         ✓ Estimer la direction d'arrivée du signal en exploitant conjointement tous les capteurs,
         ✓ Estimer l'amplitude complexe du signal indépendamment pour chaque capteur, en utilisant la direction d'arrivée estimée,
         ✓ Projeter l'amplitude complexe estimée sur le sous-espace défini par la direction d'arrivée estimée pour conserver dans l'estimation indépendante de l'amplitude complexe, la composante correspondant à la direction d'arrivée estimée à l'étape précédente.

2. Procédé d'estimation selon la revendication 1 dans lequel lesdits paramètres représentatifs incluent le retard de propagation, la fréquence Doppler et la direction d'arrivée d'un signal.

3. Dispositif de localisation apte à discriminer un signal utile de signaux multi-trajets, le dispositif comprenant au moins deux capteurs (A1,A2) de signaux de radiolocalisation émis par un satellite, chacun desdits capteurs étant connecté à au moins deux lignes de traitement des signaux, chaque ligne de traitement comprenant un corrélateur (C11,C12) et au moins une ligne à retard (R11m) apte à introduire un retard correspondant à un multiple de la durée d'intégration des corrélateurs, le dispositif comprenant des moyens de traitement des signaux ($\mu$P) configurés pour mettre en œuvre le procédé selon l'une des revendications précédentes.

4. Dispositif de localisation selon la revendication 3 dans lequel un corrélateur (C11) d'une première ligne de traitement est espacé d'une fraction de la période symbole du code d'étalement par rapport au corrélateur (C12) d'une seconde ligne de traitement.

5. Dispositif de localisation selon l'une des revendications 3 ou 4 dans lequel l'algorithme d'estimation du maximum de vraisemblance est de type « SAGE ».

**Patentansprüche**

1. Verfahren zur Schätzung der Parameter eines Nutzsignals und von Mehrwegesignalen, welche von einem durch einen Satelliten ausgesendeten Funklokalisierungssignal stammen, mithilfe einer Lokalisierungsvorrichtung, umfassend mindestens zwei Sensoren, welche in der Lage sind, das Signal zu empfangen, wobei jeder der Sensoren mit mindestens zwei Signalverarbeitungsleitungen verbunden ist, wobei jede Verarbeitungsleitung einen Korrelator (C11, C12) und mindestens eine Verzögerungsleitung (R11m) umfasst, welche in der Lage ist, eine Verzögerung einzubringen, welche einem Vielfachen der Integrationsdauer der Korrelatoren entspricht, wobei das Verfahren folgende Schritte umfasst:

- Korrelieren (401) des durch die Sensoren empfangenen Signals mit einem lokalen Code mithilfe von Korrelatoren,
- Konstruieren (402), für jeden Sensor, einer abgetasteten Interkorrelationsfunktion des empfangenen Signals mit dem lokalen Code, für unterschiedliche Zeitpunkte nach der Korrelation,
- Bestimmen (403) einer räumlich-zeitlichen Interkorrelationsfunktion anhand der Verkettung der im vorherigen Schritt für jeden Sensor erzielten Interkorrelationsfunktionen,
- wiederholtes Ausführen, für jedes Mehrwegesignal und Nutzsignal, folgender Teilschritte:

• Subtrahieren (404), von der räumlich-zeitlichen Interkorrelationsfunktion, des oder der parametrischen Modelle von Signalen, welche im Zuge der vorherigen Wiederholungen geschätzt wurden,
• Schätzen (405) der Parameter, welche für ein Mehrwegesignal oder das Nutzsignal repräsentativ sind, durch Anwendung eines Algorithmus der maximalen Wahrscheinlichkeit, auf das Ergebnis der vorherigen Subtraktion, wobei das Verfahren **dadurch gekennzeichnet ist, dass** die Parameter unter Anwendung folgender Teilschritte geschätzt werden:

✔ Schätzen der Ankunftsrichtung des Signals durch gemeinsames Verwenden aller Sensoren,
✔ Schätzen der komplexen Amplitude des Signals, unabhängig für jeden Sensor, unter Verwendung der geschätzten Ankunftsrichtung,
✔ Projizieren der geschätzten komplexen Amplitude auf den durch die geschätzte Ankunftsrichtung definierten Teilraum, um in der unabhängigen Schätzung der komplexen Amplitude die Komponente beizubehalten, welche der im vorherigen Schritt geschätzten Ankunftsrichtung entspricht.

2. Schätzungsverfahren nach Anspruch 1, wobei die repräsentativen Parameter die Fortpflanzungsverzögerung, die Dopplerfrequenz und die Ankunftsrichtung eines Signals einschließen.

3. Lokalisierungsvorrichtung, welche in der Lage ist, ein Nutzsignal von Mehrwegesignalen zu unterscheiden, wobei die Vorrichtung mindestens zwei Sensoren (A1, A2) für durch einen Satelliten ausgesendete Funklokalisierungssignale umfasst, wobei jeder der Sensoren mit mindestens zwei Verarbeitungsleitungen der Signale verbunden ist, wobei jede Verarbeitungsleitung einen Korrelator (C11, C12) und mindestens eine Verzögerungsleitung (R11m) umfasst, welche in der Lage ist, eine Verzögerung einzubringen, welche einem Vielfachen der Integrationsdauer der Korrelatoren entspricht, wobei die Vorrichtung Signalverarbeitungsmittel ($\mu$P) umfasst, welche konfiguriert sind, um das Verfahren nach einem der vorhergehenden Ansprüche umzusetzen.

4. Lokalisierungsvorrichtung nach Anspruch 3, wobei ein Korrelator (C11) einer ersten Verarbeitungsleitung um eine Fraktion der Symbolperiode des Spreizcodes in Bezug auf den Korrelator (C12) einer zweiten Verarbeitungsleitung beabstandet ist.

5. Lokalisierungsvorrichtung nach einem der Ansprüche 3 oder 4, wobei der Schätzungsalgorithmus der maximalen Wahrscheinlichkeit vom Typ "SAGE" ist.

**Claims**

1. Method for estimating the parameters of useful signal and multi-path signals originating from a radiolocation signal emitted by a satellite, by means of a location device comprising at least two sensors able to receive said signal, each of said sensors being connected to at least two lines for processing the signals, each processing line comprising a correlator (C11, C12) and at least one delay line (R11m) able to introduce a delay corresponding to a multiple of the duration of integration of the correlators, the method comprising the steps of:

    - correlating (401) the signal received by said sensors with a local code by means of correlators,
    - constructing (402), for each sensor, a sampled intercorrelation function of the signal received with the local code, for various post-correlation instants,
    - determining (403) a spatio-temporal intercorrelation function on the basis of the concatenation of the intercorrelation functions obtained in the previous step for each sensor,
    - executing iteratively, for each multi-path signal and the useful signal, the sub-steps of:

        • subtracting (404), from the spatio-temporal intercorrelation function, the parametric model or models of signals estimated at the previous iterations,
        • estimating (405) the parameters representative of a multi-path signal or of the useful signal by applying a maximum likelihood algorithm to the result of the previous subtraction, the method being **characterized in that** said parameters are estimated by applying the sub-steps of:

            ✓ estimating the direction of arrival of the signal by utilizing all the sensors jointly,
            ✓ estimating the complex amplitude of the signal independently for each sensor, by using the estimated direction of arrival,
            ✓ projecting the estimated complex amplitude onto the sub-space defined by the estimated direction of arrival to retain, in the independent estimation of the complex amplitude, the component corresponding to the direction of arrival estimated in the previous step.

2. Estimation method according to claim 1, wherein said representative parameters include the propagation delay, the Doppler frequency and the direction of arrival of a signal.

3. Location device able to discriminate a useful signal from multi-path signals, the device comprising at least two sensors (A1, A2) for radiolocation signals emitted by a satellite, each of said sensors being connected to at least two lines for processing the signals, each processing line comprising a correlator (C11, C12) and at least one delay line (R11m) able to introduce a delay corresponding to a multiple of the duration of integration of the correlators, the device comprising means for processing the signals ($\mu$P) configured to implement the method according to one of the preceding claims.

4. Location device according to claim 3, wherein a correlator (C11) of a first processing line is spaced apart by a fraction of the symbol period of the spreading code with respect to the correlator (C12) of a second processing line.

5. Location device according to one of claims 3 or 4, wherein the maximum likelihood estimation algorithm is of "SAGE" type.

FIG.1

FIG.2

FIG.3

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012025306 A